# EUROPEAN PATENT APPLICATION

(11) **EP 4 817 808 A1**
(43) Date of publication of application: **07.10.2026**
(21) Application number: 26161534.8
(22) Date of filing: 02.03.2026
(51) Int. Cl.: B25J 9/16, B25J 9/06, B25J 9/10, B25J 18/06

(54) **SYSTEM AND METHOD FOR CONTROLLING A CONTINUUM ROBOT WHILST INSPECTING OR REPAIRING A COMPONENT**

(30) Priority: 02.04.2025 GB 202504901
(71) Applicant: Rolls-Royce plc, London N1 9FX (GB)
(72) Inventor: Norton, Andrew D, Derby, DE24 8BJ (GB); Wild, Samuel P, Derby, DE24 8BJ (GB); Dong, Xin, Derby, DE24 8BJ (GB)
(74) Representative: Rolls-Royce plc

(57) **Abstract**

A system (100, 200, 300, 700) for controlling a continuum robot (102, 202, 302, 702) whilst inspecting or repairing a component (104) includes a sensor (106, 206, 306, 706) that includes a Fibre Bragg grating sensor, is disposed in a helical arrangement (110) and indicates a curvature of the sensor. The sensor further includes one or more sensing components (708) embedded therein configured to generate information indicative of the current shape of the sensor at different portions of the sensor. The system further includes a controller (116) configured to receive, from the sensor, the curvature of the sensor, determine a current shape of the sensor based at least on the curvature of the sensor, determine a current shape (κ(*s*)) of the continuum robot based at least on the current shape of the sensor, and adjusting the current shape (*κ*(*s*)) to a desired shape of the continuum robot.

## Description

### FIELD

This invention relates to a system and a method for controlling a continuum robot whilst inspecting or repairing a component.

### BACKGROUND

Continuum robots (CR) have emerged as versatile systems capable of intricate maneuvers and operations in complex environments including on-wing (in-situ) inspection and repair of components such as those associated with gas turbine engines. Such CRs are typically tendon driven. The aforesaid snake-like robots can contort to navigate obstacle-ridden environments. However, it is difficult to establish accurate sensing and control of the CRs that is essential for crucial industrial adoption. For example, due to lack of accuracy in determination of a shape of the CRs during an inspection or repair operation, reliable in-situ closed-loop control of CRs is challenging, which may hinder their widespread adoption. For example, a common challenge in CRs is twists and/or torsion. The twist can be caused at least in part to an unintended axial rotation caused by asymmetrical actuation of tendons, and/or routing and/or kinematics of the CRs. The twists can degrade an accuracy in detecting the shape of the CRs and may complicate control algorithms of the CRs.

Conventional methods of determining the twist in the CRs involve complex models or empirical methods that may not fully capture effects of tendon placement and tension. Further, certain conventional methods may measure twists up to a low value. The manufacturing and application of such conventional methods in CRs are costly, and they may be unable to determine twists and/or torsion accurately. Some conventional CRs address the issue of torsion partially, but fail to compensate for multi-directional twists or local curvature variations in the CR.

There exists a need for an improved technique for addressing the abovementioned shortcomings and developing a CR that can be controlled as per desired requirements whilst inspecting or repairing components, or to at least provide a useful alternative to known methods and systems for controlling a continuum robot whilst inspecting or repairing a component.

### SUMMARY

In a first aspect, there is provided a system for controlling a continuum robot whilst inspecting or repairing a component. The system includes a sensor that includes a Fibre Bragg grating (FBG) sensor and is coupled to the continuum robot. The sensor is configured to indicate a curvature of the sensor relative to a reference point of the continuum robot. The sensor is disposed in a helical arrangement relative to a central axis of the continuum robot. The sensor further includes one or more sensing components embedded therein. The one or more sensing components are configured to indicate the current shape of the sensor at different portions of the sensor. The system further includes a controller communicably coupled with the sensor. The controller is configured to receive, from the sensor, the curvature of the sensor relative to the reference point of the continuum robot. The controller is further configured to determine a current shape of the sensor based at least on the curvature of the sensor. The controller is further configured to determine a current shape of the continuum robot based at least on the current shape of the sensor. The controller is further configured to adjust the current shape of the continuum robot such that the current shape corresponds to a desired shape of the continuum robot based at least on the determination of the current shape of the continuum robot.

The system described herein improves shape sensing/ control accuracy of the continuum robot by adjusting the current shape of the continuum robot to the desired shape based on the determination of the current shape of the continuum robot. An adjustment in the current shape of the continuum robot may reduce twists and/or torsion in the continuum robot, which may in turn provide a robust force transmission whilst the inspection or repair of the component.

The helical arrangement of the sensor may also reduce torsional friction, and thus, the system may be applicable to applications where friction in a concern such as, due to longer path lengths, usage of lubricants, usage of coatings, and/or usage of low-friction channel liners. The system may correct the shape of the continuum robot without the need of a complex, or data-driven methods, thereby enabling repeatability and robustness.

The system may be applicable to flexible instruments, catheters, borescopes, and any tubular device requiring measurement or compensation of twist in real-time with less torsional stresses on the sensor. Further, the system works well for continuum robots, and/or any other flexible string-like device that may be used in inspection and repair of components of engines, automobiles, aerospace applications, medicinal applications, or any other environments. Some examples of application of the system of the present invention may include minimally invasive surgery, search and rescue operations, and so on. Further, the system may provide shape sensing of flexible robots (such as, pneumatically actuated or concentric tube robots), flexible devices (such as, an endoscope or a borescope), and so on. The system may work well for active continuum robots possessing no random passive section. The system may operate in real-time during the repair or inspection of the component and may allow monitoring and optimizing of the repair or inspection operation being performed on the component. Further, the system may enhance a service life of the continuum robot via reduction in wear and tear of the components of the continuum robot such as tendons of the continuum robot. Furthermore, the system may enhance a performance of the inspection or repair of the component.

In some embodiments, the sensor includes a single-core FBG sensor, a multi-core FBG sensor, or a FBG sensor including multiple core fibres.

The FBG sensors may be used for enhanced proprioception of continuum robots because of their small diameter, flexibility, and immunity to electromagnetic interference, which may enable accurate indication of the curvature of the sensor relative to the reference point of the continuum robot. This may allow accurate determination of the curvature of the sensor relative to the reference point of the continuum robot. Further, the sensor may provide an enriched dataset corresponding to indications of the curvature of the sensor relative to the reference point of the continuum robot.

The sensor further includes one or more sensing components embedded therein. The one or more sensing components are configured to indicate the current shape of the sensor at different portions of the sensor. The one or more sensing components include a micro-electromechanical (MEMS) sensor or an electromagnetic tracker. The sensor including the FBG and the one or more sensing components may allow accurate determination of the current shape of the sensor.

In some embodiments, the curvature of the sensor is determined along each of an X-axis, a Y-axis, and a Z-axis of the continuum robot. The determination of the curvature of the sensor along each of the X-axis, the Y-axis, and the Z-axis of the continuum robot may provide for the accurate determination of the curvature of the sensor.

In some embodiments, the controller is configured to determine at least one of a twist in the continuum robot and a torsion in the continuum robot. The controller is further configured to determine the current shape of the continuum robot based at least on the current shape of the sensor, and at least one of the twist in the continuum robot and the torsion in the continuum robot.

The controller may determine at least one of the twist in the continuum robot and the torsion in the continuum robot based at least on the twist and/or the torsion in the sensor. Further, the controller determines the twist and/or the torsion in the sensor based at least on the curvature of the sensor. Determination of the current shape of the continuum robot using the current shape of the sensor, and at least one of the twist in the continuum robot and the torsion in the continuum robot may generate accurate and reliable results for the current shape of the continuum robot. Thus, the system may be used for tendon-driven continuum robots that are subjected to the twist and/or the torsion during the repair or inspection of the component.

In some embodiments, the helical direction of the sensor includes a clockwise or an anticlockwise direction relative to the central axis of the continuum robot.

In some embodiments, the continuum robot includes a backbone having a plurality of vertebrae and a plurality of tendons circumferentially arranged around the backbone at various angular positions. The sensor is disposed proximal to the backbone of the continuum robot and/or proximal to an outer surface defined by the continuum robot. Thus, the system of the present invention may be used to adjust the shape of different types of tendon driven robots.

In some embodiments, at least one of the plurality of tendons is the sensor. Specifically, the sensor themself operates as tendon of the continuum robot and may be used to control a movement of the continuum robot.

In some embodiments, the plurality of tendons include a tendon disposed in the helical arrangement relative to the central axis of the continuum robot. The sensor is coupled to the tendon. The coupling of the tendon with the sensor may ensure precise consideration of dynamics of tendons such as direct forces exerted by the tendons, leading to accurate indications of the curvature of the sensor.

In some embodiments, the reference point is defined at the backbone of the continuum robot. The indications of the curvatures of the sensor relative to the backbone of the continuum robot may simplify the determination of the curvature of the sensor.

In some embodiments, a pitch of the sensor varies along a length of the continuum robot or the pitch of the sensor is uniform along the length of the continuum robot. Accordingly, the system of the present invention may be used to control the current shape of the continuum robot having the sensor with different pitches across different sections of the continuum robot or the sensor having a uniform pitch across different sections of the continuum robot.

In some embodiments, a cross-sectional area of the sensor varies along a length of the continuum robot or the cross-sectional area of the sensor is uniform along the length of the continuum robot. Accordingly, the system of the present invention may be used to control the current shape of the continuum robot having the sensor with different cross-sectional areas across different sections of the continuum robot or the sensor having a uniform cross-sectional area across different sections of the continuum robot.

In some embodiments, the component is a gas turbine engine component. The system may be used for controlling the continuum robot whilst inspecting or repairing various components associated with the gas turbine engine that have complex geometry and are difficult to access.

In some embodiments, the controller is configured to determine a curvature angle of the sensor. The controller is further configured to determine the current shape of the continuum robot based at least on the current shape of the sensor and the curvature angle of the sensor.

The curvature angle is of importance in accurately determining the current shape of the continuum robot. The accurate determination of the current shape of the continuum robot during the inspection or repair of the component may be used to determine deviations of the current shape from the desired shape, which may be in turn used to control the continuum robot whilst the inspection or repair of the component.

In a second aspect, there is provided a method for controlling a continuum robot whilst inspecting or repairing a component. The method includes indicating, by a sensor that includes a Fibre Bragg grating (FBG) sensor that is coupled to the continuum robot, a curvature of the sensor relative to a reference point of the continuum robot. The sensor is disposed in a helical arrangement relative to a central axis of the continuum robot. The sensor extends along a helical direction relative to the central axis. The sensor further includes one or more sensing components embedded therein. The one or more sensing components being configured to generate information indicative of the current shape of the sensor at different portions of the sensor. The method further includes receiving, from the sensor, the curvature of the sensor relative to the reference point of the continuum robot. The method further includes determining a current shape of the sensor based at least on the curvature of the sensor. The method further includes determining a current shape of the continuum robot based at least on the current shape of the sensor. The method further includes adjusting the current shape of the continuum robot such that the current shape corresponds to a desired shape of the continuum robot based at least on the determination of the current shape of the continuum robot.

The method described herein improves shape sensing/ control accuracy of the continuum robot by adjusting the current shape of the continuum robot to the desired shape based on the determination of the current shape of the continuum robot. An adjustment in the current shape of the continuum robot may reduce twists and/or torsion in the continuum robot, which may in turn provide a robust force transmission whilst the inspection or repair of the component. The helical arrangement of the sensor may also reduce torsional friction, and thus, the method may be applicable to applications where friction in a concern such as, due to longer path lengths, usage of lubricants, usage of coatings, and/or usage of low-friction channel liners. The method may correct the shape of the continuum robot without the need of a complex, or data-driven methods, thereby enabling repeatability and robustness.

The method may be applicable to flexible instruments, catheters, borescopes, and any tubular device requiring measurement or compensation of twist in real-time with less torsional stresses on the sensor. Further, the method works well for continuum robots, and/or any other flexible string-like device that may be used in inspection and repair of components of engines, automobiles, aerospace applications, medicinal applications, or any other environments. Some examples of application of the method of the present invention may include minimally invasive surgery, search and rescue operations, and so on. Further, the method may provide shape sensing of flexible robots (such as, pneumatically actuated or concentric tube robots), flexible devices (such as, an endoscope or a borescope), and so on. The method may work well for active continuum robots possessing no random passive section. The method may operate in real-time during the repair or inspection of the component and may allow monitoring and optimizing of the repair or inspection operation being performed on the component. Further, the method may enhance a service life of the continuum robot via reduction in wear and tear of the components of the continuum robot such as tendons of the continuum robot. Furthermore, the method may enhance a performance of the inspection or repair of the component.

In some embodiments, the method further includes determining a curvature angle of the sensor. The method further includes determining the current shape of the continuum robot based at least on the current shape of the sensor and the curvature angle of the sensor. The curvature angle is of importance in accurately determining the current shape of the continuum robot. The accurate determination of the current shape of the continuum robot during the inspection or repair of the component may be used to determine deviations of the current shape from the desired shape, which may be in turn used to control the continuum robot whilst the inspection or repair of the component.

In some embodiments, the method further includes determining at least one of a twist in the continuum robot and a torsion in the continuum robot. The method further includes determining the current shape of the continuum robot based at least on the current shape of the continuum robot and at least one of the twist in the continuum robot and the torsion in the continuum robot.

The controller may determine at least one of the twist in the continuum robot and the torsion in the continuum robot based at least on the twist and/or the torsion in the sensor. Further, the controller determines the twist and/or the torsion in the sensor based at least on the curvature of the sensor. Determination of the current shape of the continuum robot using the current shape of the sensor, and at least one of the twist in the continuum robot and the torsion in the continuum robot may generate accurate and reliable results for the current shape of the continuum robot. Thus, the method may be used for tendon-driven continuum robots that are subjected to the twist and/or the torsion during the repair or inspection of the component.

In some embodiments, the method further includes determining a curvature angle of the sensor. The method further includes determining the current shape of the continuum robot based at least on the current shape of the sensor and the curvature angle of the sensor. The curvature angle is of importance in accurately determining the current shape of the continuum robot. The accurate determination of the current shape of the continuum robot during the inspection or repair of the component may be used to determine deviations of the current shape from the desired shape, which may be in turn used to control the continuum robot whilst the inspection or repair of the component.

The FBG sensors may be used for enhanced proprioception of continuum robots because of their small diameter, flexibility, and immunity to electromagnetic interference, which may enable accurate indication of the curvature of the sensor relative to the reference point of the continuum robot. This may allow accurate determination of the curvature of the sensor relative to the reference point of the continuum robot. Further, the sensor may provide an enriched dataset corresponding to indications of the curvature of the sensor relative to the reference point of the continuum robot.

In some embodiments, the helical direction of the sensor includes a clockwise or an anticlockwise direction relative to the central axis of the continuum robot.

In some embodiments, the continuum robot includes a backbone having a plurality of vertebrae and a plurality of tendons circumferentially arranged around the backbone at various angular positions. The sensor is disposed proximal to the backbone of the continuum robot and/or proximal to an outer surface defined by the continuum robot. Thus, the method of the present invention may be used to adjust the shape of different types of tendon driven robots.

In some embodiments, at least one of the plurality of tendons is the sensor. Specifically, the sensor themself operates as tendon of the continuum robot and may be used to control a movement of the continuum robot.

In some embodiments, the plurality of tendons include a tendon disposed in the helical arrangement relative to the central axis of the continuum robot. The sensor is coupled to the tendon. The coupling of the tendon with the sensor may ensure precise consideration of dynamics of tendons such as direct forces exerted by the tendons, leading to accurate indications of the curvature of the sensor.

The details of one or more examples of the system and method are set forth in the accompanying drawings and the description below. Other features, objects, and advantages of the invention will be apparent from the description and drawings, and from the claims.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**FIG. 1** shows a sectional side view of a gas turbine engine;
**FIG. 2A** shows a schematic perspective view of a continuum robot that can be controlled by an embodiment of the system of the present invention that has a sensor that is coupled to the continuum robot and disposed in a helical arrangement relative to a central axis of the continuum robot;
**FIG. 2B** shows a schematic perspective view of the continuum robot that can be controlled by another embodiment of the system of the present invention where the sensor is disposed proximal to the backbone of the continuum robot;
**FIG. 2C** shows a schematic perspective view of the continuum robot that can be controlled by yet another embodiment of the system of the present invention where some portions of the sensor are disposed proximal to an outer surface of the continuum robot and some portions of the sensor are disposed proximal to the backbone of the continuum robot;
**FIG. 3A** shows a schematic side view of the continuum robot of FIG 2A depicting a start point of the sensor of the system of the present invention;
**FIG. 3B** illustrates a pitch and a radius of the sensor shown in FIG. 2A;
**FIG. 3C** illustrates a pitch angle of the sensor shown in FIG. 2A;
**FIG. 4** illustrates a system for controlling a continuum robot whilst inspecting or repairing the component. The sensor has one or more sensing components embedded therein;
**FIG. 5** illustrates an exemplary graph depicting twists and torsions in the continuum robot at different pitch angles of the sensor; and
**FIG. 6** shows a flowchart of a method for controlling the continuum robot whilst inspecting or repairing the component.

### DETAILED DESCRIPTION

Aspects and embodiments of the present invention will now be discussed with reference to the accompanying figures. Further aspects and embodiments will be apparent to those skilled in the art.

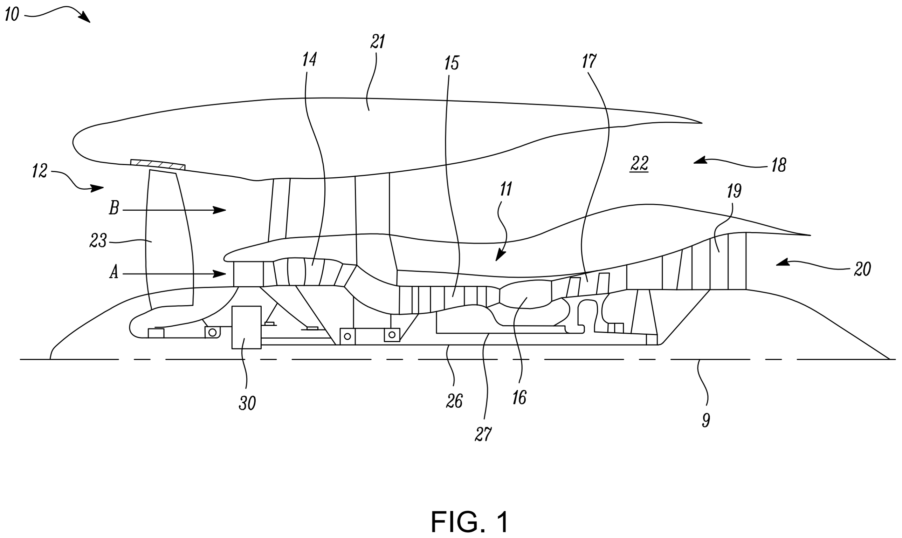

**FIG. 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the system and method of the present invention may be applied may have alternative configurations. For example, such engines may have an alternative number of compressors and/or turbines and/or an alternative number of interconnecting shafts. By way of further example, the gas turbine engine 10 shown in FIG. 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the system and method of the present invention may be used in conjunction to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction (perpendicular to the page in the FIG. 1 view). The axial, radial, and circumferential directions are mutually perpendicular.

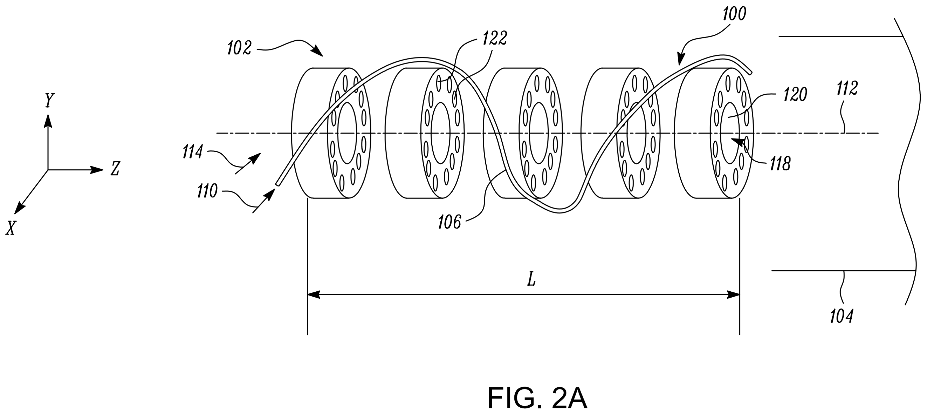

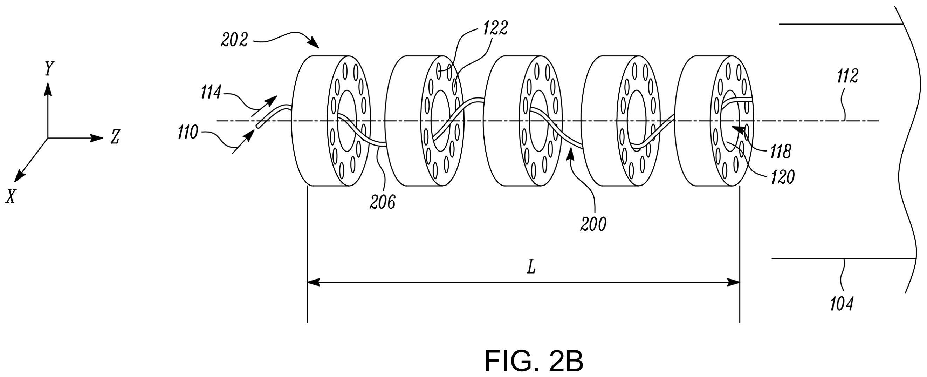

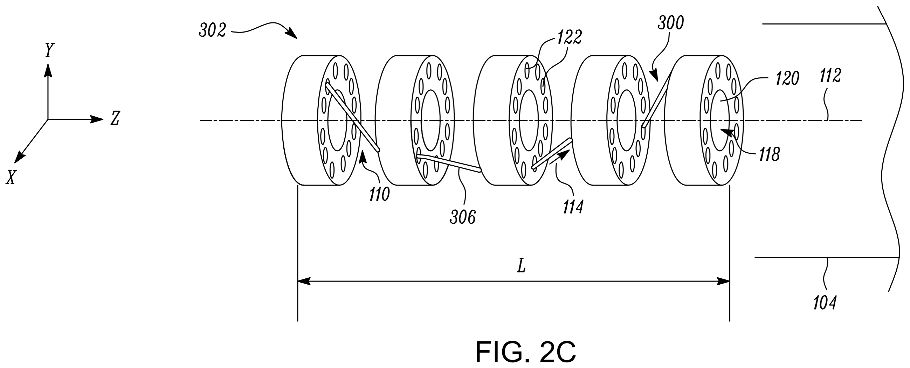

**FIGS. 2A****,** **2B****, and** **2C** show schematic perspective views of a continuum robot 102, 202, 302. Referring to FIGS. 2A to 2C, the present invention relates to a system 100, 200, 300 for controlling the continuum robot 102, 202, 302 whilst inspecting or repairing a component 104. In an embodiment, the component 104 is the gas turbine engine 10 (shown in FIG. 1) component. The component 104 may be the turbine 17, 19 (shown in FIG. 1), the compressor 14, 15 (shown in FIG. 1), the combustion equipment 16 (shown in FIG. 1), and the like. The system 100, 200, 300 may be used for controlling the continuum robot 102, 202, 302 whilst inspecting or repairing various components 104 associated with the gas turbine engine 10 that typically have complex geometry and are difficult to access. In an embodiment, the continuum robot 102, 202, 302 includes a backbone 118 having a plurality of vertebrae 120 and a plurality of tendons 122 circumferentially arranged around the backbone 118 at various angular positions. The system 100, 200, 300 of the present invention may be used to adjust a shape of different types of tendon-driven robots.

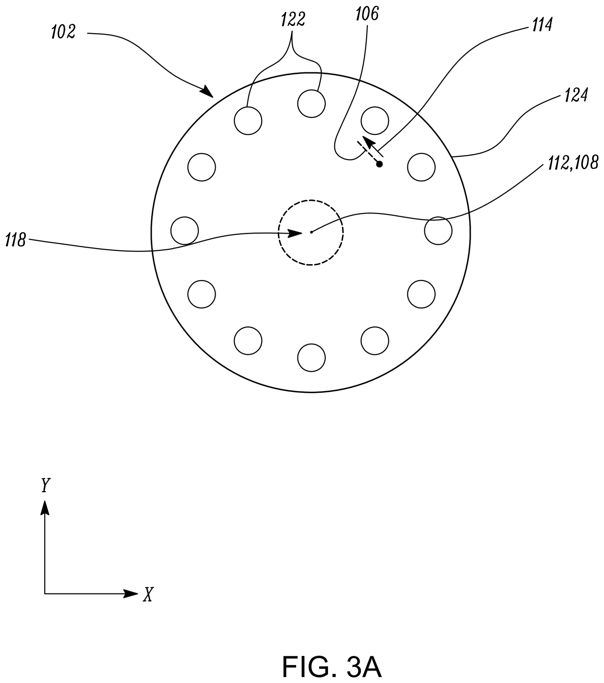

Referring now to FIG. 2A, the system 100 includes a sensor 106 coupled to the continuum robot 102. The sensor 106 is configured to indicate a curvature of the sensor 106 relative to a reference point 108 (shown in FIG. 3A) of the continuum robot 102. The sensor 106 is disposed in a helical arrangement 110 relative to a central axis 112 of the continuum robot 102. The sensor includes one or more sensing components embedded therein described in more detail below.

In an embodiment, the reference point 108 is defined at the backbone 118 of the continuum robot 102. The indications of the curvature of the sensor 106 relative to the backbone 118 of the continuum robot 102 may simplify the determination of the curvature of the sensor 106.

In an embodiment, the curvature of the sensor 106 is determined along each of an X-axis, a Y-axis, and a Z-axis of the continuum robot 102. The sensor 106 disposed in the helical arrangement 110 may allow accurate indication of the curvature of the sensor 106 along each of the X-axis, the Y-axis, and the Z-axis of the continuum robot 102, relative to the reference point 108 of the continuum robot 102. The determination of the curvature of the sensor 106 along each of the X-axis, the Y-axis, and the Z-axis of the continuum robot 102 may in turn provide for the accurate determination of the curvature of the sensor 106.

In the illustrated embodiment of FIG. 2A, at least one of the plurality of tendons 122 is the sensor 106. Specifically, the sensor 106 itself operates as a tendon and may be used to control a movement of the continuum robot 102. Further, the sensor 106 is disposed proximal to the backbone 118 of the continuum robot 102 and/or proximal to an outer surface 124 (shown in FIG. 3A) defined by the continuum robot 102. In the illustrated embodiment of FIG. 2A, the sensor 106 is disposed proximal to the outer surface 124 defined by the continuum robot 102. It should be noted that the sensor 106 is disposed within the continuum robot 102.

The sensor 106 includes a Fibre Bragg grating (FBG) sensor. In an embodiment, the sensor 106 includes a single-core FBG sensor, a multi-core FBG sensor, or a FBG sensor including multiple core fibres. The FBG sensor includes an optical fibre. The optical fibre has at least a FBG positioned at a joint within the continuum robot 102. If a bundle of fibres has been used, a FBG may be present at a point corresponding to joint positions. A Fibre Bragg grating is a length of optical fibre that has a distributed Bragg reflector constructed within a short segment of it. The Bragg reflector allows certain wavelengths to pass and others to be reflected. The optical fibres can be single, multicore or multiple core fibres. The FBG sensors can be used to determine the curvature of the sensor 106 based on strain distributions in each grating. As light passes through the optical fibre, it is reflected at each grating at a specific wavelength called the Bragg wavelength. The shift in the Bragg wavelengths can be used to determine the curvature of the sensor 106.

The FBG sensors may be used for enhanced proprioception of continuum robots 102 because of their small diameter, flexibility, and immunity to electromagnetic interference, which may enable the accurate indication of the curvature of the sensor 106 relative to the reference point 108 (see FIG. 3A) of the continuum robot 102. Further, the sensor 706 may provide an enriched dataset corresponding to indications of the curvature of the sensor 706 relative to the reference point 108 of the continuum robot 102.

**FIG. 3A** shows a schematic cross section view of the continuum robot of FIG 2A depicting a start point of the sensor 106, in accordance with an embodiment of the present invention. Referring to FIGS. 2A and 3A, in an embodiment, the sensor 106 extends along a helical direction 114. The helical direction 114 includes a clockwise or an anticlockwise direction relative to the central axis 112 of the continuum robot 102. In the illustrated embodiment of FIGS. 2A and 3A, the helical direction 114 of the sensor 106 includes the anticlockwise direction relative to the central axis 112 of the continuum robot 102. Alternatively, the helical direction 114 of the sensor 106 may include the clockwise direction relative to the central axis 112 of the continuum robot 102.

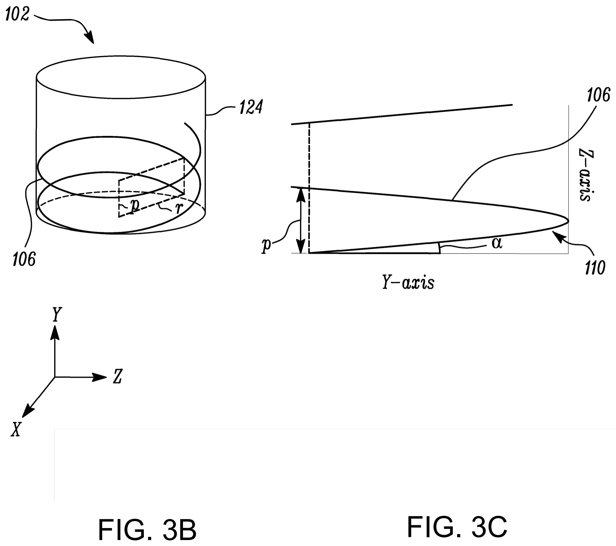

**FIG. 3B** illustrates a pitch p and a radius r of the sensor 106 of FIG. 2A, in accordance with an embodiment of the present invention. Referring to FIG. 3B, in an embodiment, the pitch p of the sensor 106 varies along a length L of the continuum robot 102 or the pitch p of the sensor 106 is uniform along the length L of the continuum robot 102. In an embodiment, the pitch p of the sensor 106 could vary along the length of the continuum robot 102 in case, different sections of the continuum robot 102 require different levels of torsional compensation. Accordingly, the system 100 of the present invention may be used to control the current shape *κ*(*s*) of the continuum robot 102 having the sensor 106 with different pitches across different sections of the continuum robot 102 or the sensor 106 having a uniform pitch across different sections of the continuum robot 102.

Moreover, in an embodiment, the sensor 106 has the radius r relative to the central axis 112. In an embodiment, the radius r of the sensor 106 varies along the length L of the continuum robot 102 or the radius r is uniform along the length L of the continuum robot 102.

In an embodiment, a cross-sectional area of the sensor 106 varies along the length L of the continuum robot 102 or the cross-sectional area of the sensor 106 is uniform along the length L of the continuum robot 102. Accordingly, the system 100 of the present invention may be used to control the current shape of the continuum robot 102 having the sensor 106 with different cross-sectional areas across different sections of the continuum robot 102 or the sensor 106 having a uniform cross-sectional area across different sections of the continuum robot 102.

**FIG. 3C** illustrates a pitch angle α of the sensor 106 of FIG. 2A, in accordance with an embodiment of the present invention. The pitch angle α of the sensor 106 varies along the length L of the continuum robot 102 or the pitch angle α of the sensor 106 is uniform along the length L of the continuum robot 102. Accordingly, the system 100 of the present invention may be used to control the current shape *κ*(*s*) of the continuum robot 102 having the sensor 106 with different pitch angles α across different sections of the continuum robot 102 or the sensor 106 having a pitch angle α across different sections of the continuum robot 102. The pitch angle α of the sensor 106 may be decided by a designer based upon properties of the continuum robot 102 for typical operating conditions. The designer may choose the radius r and the pitch *p* of the sensor 106 to minimise twists in the sensor 106. In some examples, the designer may choose the radius *r* and the pitch *p* of the sensor 106 based upon a maximum value of the curvature of the continuum robot and the maximum value of the twists in the continuum robot 702.

Referring now to FIG. 2B, the system 200 includes a sensor 206. The system 200 is substantially similar to the system 100 with common components referred to by the same numeral. The sensor 206 is substantially similar to the sensor 106 explained in relation to FIGS. 2A, and 3A to 3C. However, the sensor 206 is disposed proximal to the backbone 118 of the continuum robot 102.

Referring now to FIG. 2C, the system 300 includes a sensor 306. The system 300 is substantially similar to the system 100 with common components referred to by the same numeral. The sensor 306 is substantially similar to the sensor 106 explained in relation to FIGS. 2A, and 3A to 3C. However, the sensor 306 is disposed between the backbone 118 and the outer surface 124 defined by the continuum robot 302. Specifically, some portions of the sensor 306 are disposed proximal to the outer surface 124 and some portions of the sensor 306 are disposed proximal to the backbone 118.

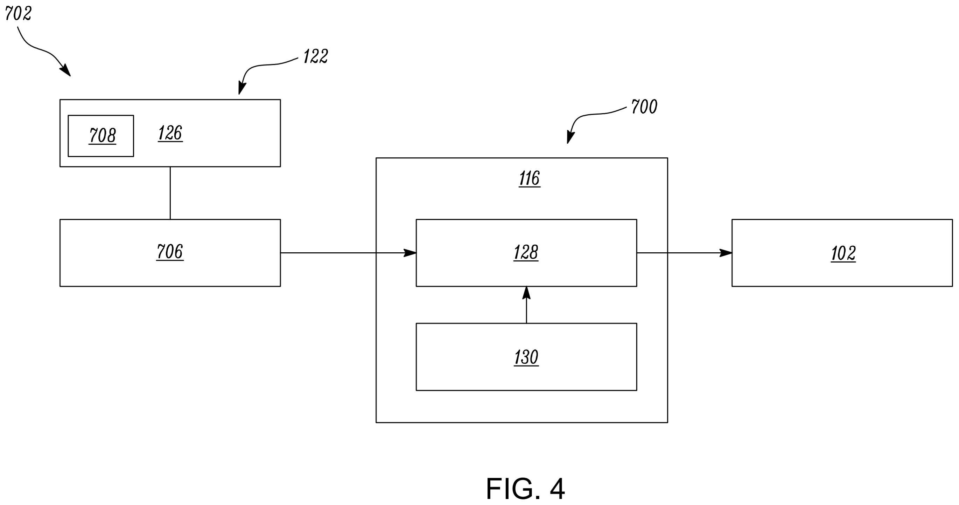

**FIG. 4** illustrates a system 700 for controlling a continuum robot 702 whilst inspecting or repairing the component 104 (see FIG. 2A). The system 700 is substantially similar to the system 100 (see FIG. 2A) with common components referred to by the same numeral. The continuum robot 702 is substantially similar to the continuum robot 102 (see FIG. 2A) with common components referred to by the same numeral. The system 700 includes a sensor 706. The sensor 706 is substantially similar to the sensor 106 explained in relation to FIGS. 2A, and 3A to 3C. The sensor 706 is disposed in the helical arrangement 110 (see FIG. 2A) relative to the central axis 112 (see FIG. 2A) of the continuum robot 702. The sensor 706 extends along the helical direction 114 (see FIG. 2A) relative to the central axis 112.

In an embodiment, the plurality of tendons 122 include a tendon 126 disposed in the helical arrangement 110 relative to the central axis 112 of the continuum robot 702. The sensor 706 is coupled to the tendon 126. The tendon 126 extends along the helical direction 114 relative to the central axis 112. The coupling of the tendon 126 with the sensor 706 may ensure precise consideration of dynamics of the tendon 126 such as direct forces exerted by the tendons 126. The sensor 706 and/or the tendon 126 may include standard silica fibres, polymer optical fibres, metal coated fibres or novel waveguides arranged helically for applications requiring higher durability or temperature resistance.

The system 100 further includes a controller 116 communicably coupled with the sensor 706. The controller 116 may also be associated with the continuum robots 102, 202, 302 (see FIGS. 2A to 2C). The controller 116 is a device comprising hardware, software, or a combination of both along with memory. The controller 116 receives data and processes the data via processors 128, to manage the inspection or the repairing of the component 104. The controller 116 may include one or more processors 128 and one or more memories 130 in communication with the one or more processors 128. In some examples, the memories 130 may include a random access memory (RAM), such as synchronous dynamic random access memory (SDRAM), a read-only memory (ROM), a non-volatile random access memory (NVRAM), an electrically erasable programmable read-only memory (EEPROM), a FLASH memory, a magnetic or optical data storage media, and the like, that can be used to store various information or desired program codes in the form of instructions or data structures and that can be accessed by processors 128.

Further, the processors 128 may execute various types of digitally stored instructions, such as software applications or algorithms, retrieved from the memories, or a firmware program which may enable the processors 128 to perform a wide variety of operations. It should be noted that the processors 128 may embody a single microprocessor or multiple microprocessors for receiving various input signals and generating output signals. Numerous commercially available microprocessors may perform the functions of the processors 128. Each processor 128 may further include a general processor, a central processing unit, an application specific integrated circuit (ASIC), a digital signal processor, a field programmable gate array (FPGA), a digital circuit, an analog circuit, a microcontroller, any other type of processor, or any combination thereof. Each processor 128 may include one or more components that may be operable to execute computer executable instructions or computer code that may be stored and retrieved from the memories 130.

The controller 116 is configured to receive, from the sensor 706, the curvature of the sensor 706 relative to the reference point 108 (see FIG. 3A) of the continuum robot 702. The controller 116 receives the curvature of the sensor 706 while the inspection or repair operation is being performed on the component 104.

The controller 116 is further configured to determine a current shape of the sensor 106 based at least on the curvature of the sensor 706. The controller 116 may use control algorithms and/or kinematic modelling to determine the current shape of the sensor 706.

The sensor 106 further includes one or more sensing components 708 embedded therein. The one or more sensing components 708 are configured to indicate the current shape of the sensor 106 at the different portions of the sensor 106. The one or more sensing components 708 include a micro-electromechanical (MEMS) sensor or an electromagnetic tracker. The sensor 706 including the FBG and the one or more sensing components 708 may allow accurate determination of the current shape of the sensor 706.

The MEMS sensor may measure bending, strain, local deformation, or displacement at the different portions of the sensor 106. The electromagnetic tracker may determine the position and orientation of the sensor 106 at different portions thereof. The sensor 106 may process the aforesaid data to construct the current shape of the sensor 106 in real time.

The controller 116 is further configured to determine a current shape *κ*(*s*) of the continuum robot 702 based at least on the current shape of the sensor 106. The controller 116 processes at least the current shape of the sensor 106 via, for example, a Piecewise Constant Curvature (PCC) Model. This may allow determination of the current shape *κ*(*s*) of the continuum robot 702.

The controller 116 is further configured to adjust the current shape *κ*(*s*) of the continuum robot 102 such that the current shape *κ*(*s*) corresponds to a desired shape of the continuum robot 102 based at least on the determination of the current shape *κ*(*s*) of the continuum robot 102. In some embodiments, the controller 116 may extract deviations of the current shape *κ*(*s*) of the continuum robot 702 from the desired shape of the continuum robot 702 via a closed-loop control, such as, Proportional-Integral-Derivative Control, Fuzzy Logic Control or Model Predictive Control and accordingly adjusts the current shape *κ*(*s*) of the continuum robot 702. In some embodiments, the desired shape of the continuum robot 702 may be predetermined and stored in the memory 130 of the controller 116 for various possible motions and locations of the continuum robot 702 during the inspection or repair of the component 104.

In some examples, the current shape of the sensor 706 and/or the current shape *κ*(*s*) of the continuum robot 702 may be computed by a user (instead of being determined by the controller 116) based on receipt of information from the sensor 706 and a know-how of other parameters.

Adjusting the current shape *κ*(*s*) of the continuum robot 702 so that the current shape *κ*(*s*) corresponds to the desired shape of the continuum robot 702 may allow accurate control of the desired shape of the continuum robot 702 that is crucial during the repair or inspection of the component 104.

In an embodiment, the controller 116 is configured to determine at least one of a twist *κ*(*s*) in the continuum robot 702 and a torsion *τ_{f}*(*s*) in the continuum robot 702. The controller 116 may determine the at least one of the twist τ(*s*) in the continuum robot 702 and the torsion *τ_{f}*(*s*) in the continuum robot 702 based at least on torsions *τ_{f},_{A}* (*s*) in the sensor 706.

The controller 116 is further configured to determine the current shape *κ*(*s*) of the continuum robot 702 based at least on the current shape of the sensor 706 and at least one of the twist *τ*(*s*) in the continuum robot 702 and the torsion *τ_{f}*(*s*) in the continuum robot 702.

Determination of the current shape *κ*(*s*) of the continuum robot 702 using the current shape of the sensor 706, and at least one of the twist *τ*(*s*) in the continuum robot 702 and the torsion *τᵣ*(*s*) in the continuum robot 702 may generate accurate and reliable results for the current shape *κ*(*s*) of the continuum robot 702. The system 700 may correct the shape of the continuum robot 702 without the need of a complex, or data-driven methods, thereby enabling repeatability and robustness. Thus, the system 700 may be used for tendon-driven continuum robots that are subjected to the twist *τ*(*s*) and/or the torsion *τ_{f}*(*s*) whilst the repair or inspection of the component 104.

In an embodiment, the controller 116 is further configured to determine a curvature angle *θ*(*s*) of the sensor 706. The controller 116 may use mathematical modelling and/or the sensor fusion techniques to determine the curvature angle *θ*(*s*) of the sensor 706 relative to, for example, the central axis 112 of the continuum robot 702.

The controller 116 is further configured to determine the current shape *κ*(*s*) of the continuum robot 702 based at least on the current shape of the sensor 706 and the curvature angle of the sensor 106. The curvature angle is important in determining the current shape *κ*(*s*) of the continuum robot 702.

The accurate sensing of the current shape *κ*(*s*) of the continuum robot 702 whilst the inspection or repair of the component 104 provides for deviations of the current shape *κ*(*s*) from the desired shape, which may in turn improve the control of the continuum robot 702 whilst the inspection or repair of the component 104.

The mathematical presentation provided below may be used to determine curvatures and the torsional loads as well as twists in the continuum robot 702.

### Helical fibre path parameterisation

The curvature of the sensor 706 along each of the X-axis, the Y-axis, and the Z-axis of the continuum robot 702 is parameterised as: $x \left(s\right) = r cos \left(θ\left(s\right)\right)$ $y \left(s\right) = r sin \left(θ\left(s\right)\right)$ $z \left(s\right) = \frac{p}{2 π} θ \left(s\right)$ where, *θ*(*s*) is the angular position/ curvature angle of the sensor 706 as a function of an arc length s of the continuum robot 702, r is the radius of the helical arrangement 110 of the sensor 706 (consistent along the arc length s), and *p* is the pitch of the sensor 706.

The pitch angle *α* of the helical arrangement 110 of the sensor 706 relates the radius *r* and the pitch *p* as: $tan \left(α\right) = \frac{\frac{p}{2 π}}{r}$

### Torsional Loads

When the backbone 118 of the continuum robot 102, experiences the twist *τ*(*s*) about the central axis 112, a sensor with a straight core placed along the central axis 112 inherits the twist *τ*(*s*) as the torsion *τ_{f_{straight}}*(*s*)*.* ${τ}_{{f}_{straight}} \left(s\right) = τ \left(s\right)$

In contrast, if the sensor 706 is wrapped in the helical arrangement 110 away from the central axis 112, a portion of the twist *τ*(*s*) in the continuum robot 702 is manifested in local curvature or extension of the sensor 706 rather than pure torsion about an axis of the sensor 706.

A simplified relationship (for small bends and uniform geometry) can be written as: ${τ}_{f} \left(s\right) = τ \left(s\right) cos \left(α\right) - κ \left(s\right) sin \left(α\right)$ where, *τ_{f}*(*s*) is the torsion in the continuum robot 702, *κ*(*s*) is the curvature of the continuum robot 702 at the arc length s of the continuum robot 702, and α is the pitch angle of the sensor 706.

Here, the factor *τ*(*s*) cos(*α*) represents the portion of the twist *τ_{f}*(*s*) of the continuum robot 706 transmitted to a tangent of the sensor 706, and the factor -κ(*s*) sin(*α*) reflects how bending of the continuum robot 706 contributes towards a rotation around the axis of the sensor 110 due to the helical arrangement 110 of the sensor 110.

In some examples, strain distributions measured in the sensor 706 may reveal a relationship between the twist *τ*(*s*) and the curvature *κ*(*s*) of the continuum robot 702 for the arc length s, making it possible to infer the twist *τ*(*s*) from the difference in wavelength signals received from the sensor 706 along the helical arrangement 110 of the sensor 706.

Further, in some examples, baseline wavelength signals, such as with load and without loads, from the sensor 706, may relate the data received from the sensor 706 with the curvature *κ*(*s*) of the continuum robot and the torsion *τ_{f}*(*s*) in the continuum robot 702. This may enable calibration of the sensor 706.

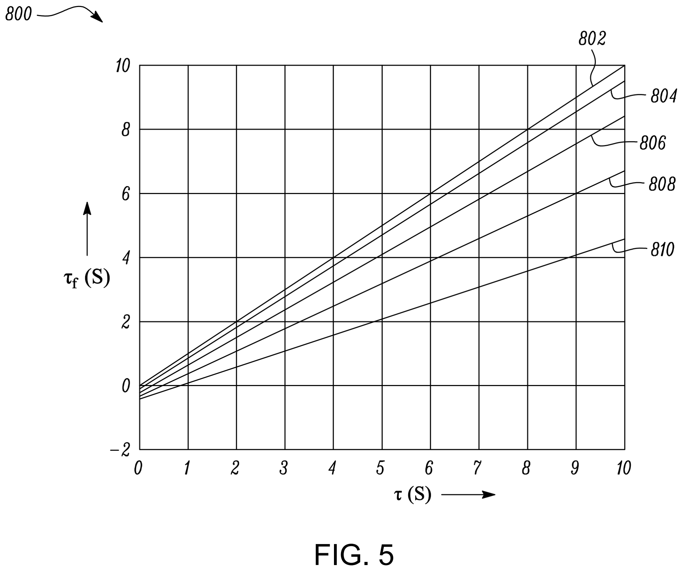

**FIG. 5** illustrates an exemplary graph 800 depicting twist in the sensor 706 and torsion *τ_{f}*(*s*) in the continuum robot 702 at different pitch angles α of the sensor 706 (see FIG. 4). The graph 800 illustrates a reduced torsional load on the sensor 706. An ordinate and an abscissa of the exemplary graph 800 represents the twist in the sensor 706 and the torsion *τ_{f}*(*s*) in the continuum robot 702, respectively. The graph 800 illustrates lines 802, 804, 806, 808, 810 depicting a variation of the twist in the sensor 706 and the torsion *τ_{f}*(*s*) in the continuum robot 702 at the pitch angles *α* of 0 degrees, 15 degrees, 30 degrees, 45 degrees, and 60 degrees, respectively.

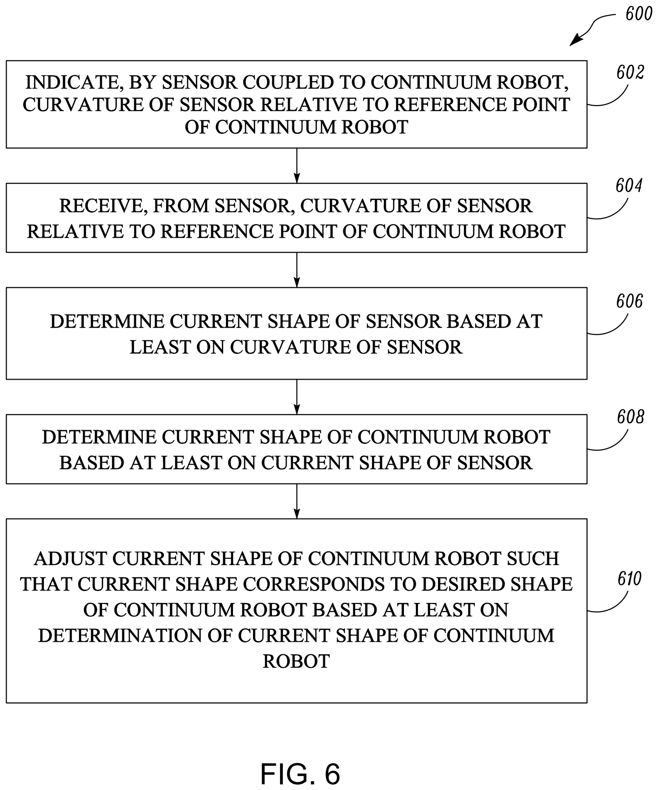

**FIG. 6** shows a flowchart of a method 600 for controlling the continuum robot 102, 202, 302, 702 whilst inspecting or repairing the component 104. The method 600 will be described with further reference to FIGS. 1 to 6.

At step 602, the method 600 includes indicating, by the sensor 106, 206, 306, 706 coupled to the continuum robot 102, 202, 302, 702, the curvature of the sensor 106, 206, 306, 706 relative to the reference point 108 of the continuum robot 102, 202, 302, 702. The sensor 106, 206, 306, 706 is disposed in the helical arrangement 110 relative to the central axis 112 of the continuum robot 102, 202, 302, 702. The sensor 106, 206, 306, 706 extends along the helical direction 114 relative to the central axis 112. The sensor 106, 206, 306, 706 includes a Fibre Bragg grating (FBG) sensor. In an embodiment, the helical direction 114 of the sensor 106, 206, 306, 706 includes the clockwise or the anticlockwise direction relative to the central axis 112 of the continuum robot 102, 202, 302, 702.

In an embodiment, the continuum robot 102, 202, 302, 702 includes the backbone 118 having the plurality of vertebrae and the plurality of tendons circumferentially arranged around the backbone 118 at various angular positions. The sensor 106, 206, 306, 706 is disposed proximal to the backbone 118 of the continuum robot 102, 202, 302, 702 and/or proximal to the outer surface defined by the continuum robot 102, 202, 302, 702. In an embodiment, at least one of the plurality of tendons 122 is the sensor 106, 206, 306. In an embodiment, the plurality of tendons 122 includes the tendon 126 disposed in the helical arrangement 110 relative to the central axis of the continuum robot 702. The sensor 706 is coupled to the tendon 126.

At step 604, the method 600 further includes receiving, from the sensor 106, 206, 306, 706, the curvature of the sensor 106, 206, 306, 706 relative to the reference point 108 of the continuum robot 102, 202, 302, 702.

At step 606, the method 600 further includes determining the current shape of the sensor 106, 206, 306, 706 based at least on the curvature of the sensor 106, 206, 306, 706.

At step 608, the method 600 further includes determining the current shape *κ*(*s*) of the continuum robot 102, 202, 302, 702 based at least on the determination of the current shape of the sensor 106, 206, 306, 706.

At step 610, the method 600 further includes adjusting the current shape *κ*(*s*) of the continuum robot 102, 202, 302, 702 such that the current shape *κ*(*s*) corresponds to the desired shape of the continuum robot 102, 202, 302, 702 based at least on the determination of the current shape *κ*(*s*) of the continuum robot 102, 202, 302, 702.

In an embodiment, the method 600 further includes a step of determining at least one of the twist τ(*s*) in the continuum robot 102, 202, 302, 702 and the torsion *τ_{f}*(*s*) in the continuum robot 102, 202, 302, 702. The method 600 further includes determining the current shape *κ*(*s*) of the continuum robot 102, 202, 302, 702 based at least on the determined shape of the continuum robot 102, 202, 302, 702 and at least one of the twist τ(*s*) in the continuum robot 102, 202, 302, 702 and the torsion *τ_{f}*(*s*) in the continuum robot 102, 202, 302, 702.

In an embodiment, the method 600 further includes a step of determining the curvature angle *θ*(*s*) of the sensor 106, 206, 306, 706. The method 600 further includes a step of determining the current shape *κ*(*s*) of the continuum robot 102, 202, 302, 702 based at least on the current shape of the sensor 106, 206, 306, 706 and the curvature angle *θ*(*s*) of the sensor 106, 206, 306, 706.

In an example, the method 600 may be partly executed by the controller 116 (see FIG. 4). For example, the steps 604 to 610 may be executed by the controller 116.

Referring to FIGS. 2 to 6, the system 100, 200, 300, 700 and the method 600 described herein improves shape sensing/ control accuracy of the continuum robot 102, 202, 302, 702 by adjusting the current shape *κ*(*s*) of the continuum robot 102, 202, 302, 702 to the desired shape based on the determination of the current shape *κ*(*s*) of the continuum robot 102, 202, 302, 702. An adjustment in the current shape *κ*(*s*) of the continuum robot 102, 202, 302, 702 may reduce twists and/or torsion in the continuum robot 102, 202, 302, 702, which may in turn provide a robust force transmission whilst the inspection or repair of the component 104.

The helical arrangement 110 of the sensor 106, 206, 306, 706 may also reduce torsional friction, and thus, the system 100, 200, 300, 700 and the method 600 may be applicable to applications where friction in a concern such as, due to longer path lengths, usage of lubricants, usage of coatings, and/or usage of low-friction channel liners. The system 100, 200, 300, 700 and the method 600 may correct the shape of the continuum robot 102, 202, 302, 702 without the need of a complex, or data-driven methods, thereby enabling repeatability and robustness.

The system 100, 200, 300, 700 and the method 600 may be applicable to flexible instruments, catheters, borescopes, and any tubular device requiring measurement or compensation of twist in real-time with less torsional stresses on the sensor 106, 206, 306, 706. Further, the system 100, 200, 300, 700 and the method 600 works well for continuum robots 102, 202, 302, 702, and/or any other flexible string-like device that may be used in inspection and repair of components of engines, automobiles, aerospace applications, medicinal applications, or any other environments. Some examples of application of the system 100, 200, 300, 700 and the method 600 of the present invention may include minimally invasive surgery, search and rescue operations, and so on. Further, the system 100, 200, 300, 700 and the method 600 may provide shape sensing of flexible robots (such as, pneumatically actuated or concentric tube robots), flexible devices (such as, an endoscope or a borescope), and so on.

The system 100, 200, 300, 700 and the method 600 may work well for active continuum robots possessing no random passive section. The system 100, 200, 300, 700 and the method 600 may operate in real-time during the repair or inspection of the component 104 and may allow monitoring and optimizing of the repair or inspection operation being performed on the component 104. Further, the system 100, 200, 300, 700 and the method 600 may enhance a service life of the continuum robot 102, 202, 302, 702 via reduction in wear and tear of the components of the continuum robot 102, 202, 302, 702 such as tendons 122, 126 of the continuum robot 102, 202, 302, 702. Furthermore, the system 100, 200, 300, 700 and the method 600 may enhance a performance of the inspection or repair of the component 104.

It will be understood that the invention is not limited to the embodiments above described and various modifications and improvements can be made without departing from the concepts described herein. Except where mutually exclusive, any of the features may be employed separately or in combination with any other features and the invention extends to and includes all combinations and sub-combinations of one or more features described herein.

## Claims

1. A system (100, 200, 300, 700) for controlling a continuum robot (102, 202, 302, 702) whilst inspecting or repairing a component (104), the system (100, 200, 300, 700) comprising:
a sensor (106, 206, 306, 706) coupled to the continuum robot (102, 202, 302, 702), the sensor (106, 206, 306, 706) includes a Fibre Bragg grating (FBG) sensor and is configured to indicate a curvature of the sensor (106, 206, 306, 706) relative to a reference point (108) of the continuum robot (102, 202, 302, 702), the sensor (106, 206, 306, 706) being disposed in a helical arrangement (110) relative to a central axis (112) of the continuum robot (102, 202, 302, 702), and the sensor (106, 206, 306, 706) further includes one or more sensing components (708) embedded therein, the one or more sensing components (708) being configured to generate information indicative of the current shape of the sensor (106, 206, 306, 706) at different portions of the sensor (106, 206, 306, 706); and
a controller (116) communicably coupled with the sensor (106, 206, 306, 706), wherein the controller (116) is configured to:
receive, from the sensor (106, 206, 306, 706), the curvature of the sensor (106, 206, 306, 706) relative to the reference point (108) of the continuum robot (102, 202, 302, 702);
determine a current shape of the sensor (106, 206, 306, 706) based at least on the curvature of the sensor (106, 206, 306, 706);
determine a current shape (*κ*(*s*)) of the continuum robot (102, 202, 302, 702) based at least on the current shape of the sensor (106, 206, 306, 706); and
adjust the current shape (*κ*(*s*))of the continuum robot (102, 202, 302, 702) such that the current shape (*κ*(*s*))corresponds to a desired shape of the continuum robot (102, 202, 302, 702) based at least on the determination of the current shape (*κ*(*s*))of the continuum robot (102, 202, 302, 702).

2. The system (100, 200, 300, 700) of claim 1, wherein the sensor (106, 206, 306, 706) includes a single-core FBG sensor, a multi-core FBG sensor, or a FBG sensor including multiple core fibers.

3. The system (100, 200, 300, 700) of claim 1 or 2, wherein the one or more sensing components (708) includes a micro-electromechanical (MEMS) sensor or an electromagnetic tracker.

4. The system (100, 200, 300, 700) of any preceding claim, wherein the curvature of the sensor (106, 206, 306, 706) is determined along each of an X-axis, a Y-axis, and a Z-axis of the continuum robot (102, 202, 302, 702).

5. The system (100, 200, 300, 700) of any preceding claim, wherein the controller (116) is further configured to:
determine at least one of a twist (*τ*(*s*)) in the continuum robot (102, 202, 302, 702) and a torsion (*τ_{f}*(*s*)) in the continuum robot (102, 202, 302, 702); and
determine the current shape (*κ*(*s*)) of the continuum robot (102, 202, 302, 702) based at least on the current shape of the sensor (106, 206, 306, 706) and at least one of the twist (*τ*(*s*)) in the continuum robot (102, 202, 302, 702) and the torsion (*τ_{f}*(*s*)) in the continuum robot (102, 202, 302, 702).

6. The system (100, 200, 300, 700) of any preceding claim, wherein a helical direction (114) of the sensor (106, 206, 306, 706) includes a clockwise or an anticlockwise direction relative to the central axis (112) of the continuum robot (102, 202, 302, 702).

7. The system (100, 200, 300, 700) of any preceding claim, wherein the continuum robot (102, 202, 302, 702) includes a backbone (118) having a plurality of vertebrae (120) and a plurality of tendons (122) circumferentially arranged around the backbone (118) at various angular positions, the sensor (106, 206, 306, 706) being disposed proximal to the backbone (118) of the continuum robot (102, 202, 302, 702) and/or proximal to an outer surface (124) defined by the continuum robot (102, 202, 302, 702).

8. The system (100, 200, 300, 700) of claim 7, wherein at least one of the plurality of tendons (122) is the sensor (106, 206, 306).

9. The system (700) of claim 8, wherein the plurality of tendons (122) includes a tendon (126) disposed in the helical arrangement (110) relative to the central axis (112) of the continuum robot (702), the sensor (706) being coupled to the tendon (126).

10. The system (100, 200, 300, 700) of any preceding claim, wherein the reference point (108) is defined at the backbone (118) of the continuum robot (102, 202, 302, 702).

11. The system (100, 200, 300, 700) of any preceding claim, wherein a pitch (p) of the sensor (106, 206, 306, 706) varies along a length (L) of the continuum robot (102, 202, 302, 702) or the pitch (p) of the sensor (106, 206, 306, 706) is uniform along the length (L) of the continuum robot (102, 202, 302, 702), and optionally a cross-sectional area of the sensor (106, 206, 306, 706) varies along the length (L) of the continuum robot (102, 202, 302, 702) or the cross-sectional area of the sensor (106, 206, 306, 706) is uniform along the length (L) of the continuum robot (102, 202, 302, 702).

12. The system (100, 200, 300, 700) of any preceding claim, wherein the component (104) is a gas turbine engine (10) component.

13. The system (100, 200, 300, 700) of any preceding claim, wherein the controller (116) is further configured to:
determine a curvature angle (*θ*(*s*)) of the sensor (106, 206, 306, 706); and
determine the current shape (*κ*(*s*)) of the continuum robot (102, 202, 302, 702) based at least on the current shape of the sensor (106, 206, 306, 706) and the curvature angle (*θ*(*s*)) of the sensor (106, 206, 306, 706).

14. A method (600) for controlling a continuum robot (102, 202, 302, 702) for inspecting or repairing a component (104), the method (600) comprising the steps of:
indicating, by a sensor (106, 206, 306, 706) that includes a Fibre Bragg grating (FBG) sensor that is coupled to the continuum robot (102, 202, 302, 702), a curvature of the sensor (106, 206, 306, 706) relative to a reference point (108) of the continuum robot (102, 202, 302, 702), the sensor (106, 206, 306, 706) being disposed in a helical arrangement (110) relative to a central axis (112) of the continuum robot (102, 202, 302, 702), the sensor (106, 206, 306, 706) extending along a helical direction (114) relative to the central axis (112), and the sensor (106, 206, 306, 706) further includes one or more sensing components (708) embedded therein, the one or more sensing components (708) being configured to generate information indicative of the current shape of the sensor (106, 206, 306, 706) at different portions of the sensor (106, 206, 306, 706);
receiving, from the sensor (106, 206, 306, 706), the curvature of the sensor (106, 206, 306, 706) relative to the reference point (108) of the continuum robot (102, 202, 302, 702);
determining a current shape of the sensor (106, 206, 306, 706) based at least on the curvature of the sensor (106, 206, 306, 706);
determining a current shape (κ(s)) of the continuum robot (102, 202, 302, 702) based at least on the determination of the current shape of the sensor (106, 206, 306, 706); and
adjusting the current shape (κ(s)) of the continuum robot (102, 202, 302, 702) such that the current shape (κ(s)) corresponds to a desired shape of the continuum robot (102, 202, 302, 702) based at least on the determination of the current shape (*κ*(*s*)) of the continuum robot (102, 202, 302, 702).

15. The method (600) of claim 14, further comprising:
determining at least one of a twist (*τ*(*s*)) in the continuum robot (102, 202, 302, 702) and a torsion (*τ_{f}*(*s*)) in the continuum robot (102, 202, 302, 702); and
determining the current shape (*κ*(*s*)) of the continuum robot (102, 202, 302, 702) based at least on the current shape of the sensor (106, 206, 306, 706) and at least one of the twist (*τ*(*s*)) in the continuum robot (102, 202, 302, 702) and the torsion (*τ_{f}*(*s*)) in the continuum robot (102, 202, 302, 702); or
determining a curvature angle (*θ*(*s*)) of the sensor (106, 206, 306, 706); and
determining the current shape (*κ*(*s*)) of the continuum robot (102, 202, 302, 702) based at least on the current shape of the sensor (106, 206, 306, 706) and the curvature angle (*θ*(*s*)) of the sensor (106, 206, 306, 706).
